# EUROPEAN PATENT APPLICATION

(11) **EP 0 535 538 A1**
(43) Date of publication of application: **07.04.1993**
(21) Application number: 92116386.1
(22) Date of filing: 24.09.1992
(51) Int. Cl.: G06F 12/14

(54) **Computer system with controller to prevent access to non-existent addresses**

(30) Priority: 02.10.1991 JP 255331/91
(71) Applicant: KABUSHIKI KAISHA TOSHIBA, Kawasaki-shi, Kanagawa-ken 210 (JP)
(72) Inventor: Yamaki, Kazunori, c/o Intellectual Property Div., Minato-ku, Tokyo 105 (JP)
(74) Representative: Henkel, Feiler, Hänzel & Partner

(57) **Abstract**

A logic circuit (40) of a memory controller (4) compares an address value which a CPU (1) has generated with a maximal address space (SMAX or EMAX), and puts out an invalidation signal when the address value exceeds the maximal address space. The memory controller (4) invalidates an access of the CPU in response to the invalidation signal supplied from the logic circuit (40). This protection may be inhibited using a further logic circuit to allow a vectored far jump via BIOS ROM directly after reset.

## Description

The present invention relates to a computer system which has a function of protecting itself from an access to such memory addresses that do not exist in the system in a case that a maximal address space of a memory device actually equipped to the system is smaller than a memory address space to which a CPU (Central Processing Unit) used in the system is accessible.

In a computer system such as a portable computer, for instance, it may happen due to the formation of a memory device which is actually equipped to the system that a maximal address space of the memory device is smaller than a memory address space to which a CPU used in the system is accessible. For example, a total memory capacity of a memory device actually equipped to a computer system may be 16 M bytes (megabytes), whereas an address space to which a CPU of the computer system is accessible may be 21 M bytes.

In such a case, an access of the CPU to a maximal address of its 21 M byte address space causes a wraparound phenomenon to occur due to the nonexistence of such an address in the memory device that corresponds to the maximal address to which the CPU tries to access, and what is accessible by the CPU in this exemplary case is no other than an address of the fifth megabyte in the existing memory space (21 - 16 = 5).

Therefore, whenever an access of a CPU to a nonexistent address space occurs, the CPU accesses a wrong address, so that the data stored in the address accessed by the CPU may be broken. In addition, the CPU may function wrongly since wrong data will be transferred to the CPU in such a case.

The object of the present invention is to provide a computer system which has a system protecting function for preventing data destruction in a memory device and/or malfunction of a CPU when the CPU tries to access such an address that does not exist in the system due to its excess over a maximal address space actually equipped to the system.

To achieve the above object, a computer system in the present invention in which a memory device whose data storing area is smaller than an address space to which a CPU is accessible is mounted is equipped with a memory control unit which has such a logic circuit that compares an address value which the CPU tries to access with a maximal address space of the memory device, cancels a memory access of the CPU when the address value exceeds the maximal address space, and allows the memory access of the CPU when the address value is within the maximal address space.

The above system makes it possible to prevent an erroneous memory access when the CPU tries to access such an address that exceeds a maximal address space which is actually equipped to the system. Therefore, data destruction in the memory device and erroneous data transfer to the CPU will be prevented.

This invention can be more fully understood from the following detailed description when taken in conjunction with the accompanying drawings, in which:
Fig. 1 is a block diagram showing an important portion of a computer system in the present invention;
Fig. 2 is a block diagram showing a structure of logic circuit 40 in the present invention;
Fig. 3 is a block diagram showing a structure of logic circuit 50 in the present invention;
Fig. 4 is a block diagram briefly showing a structure of a portable computer to which the present invention is applied;
Fig. 5 is a timing chart for explaining an operation of the present invention; and
Figs. 6 and 7 are a flow chart for explaining an operation of the present invention.

Now, embodiments of the present invention will be explained below with reference to the drawings.

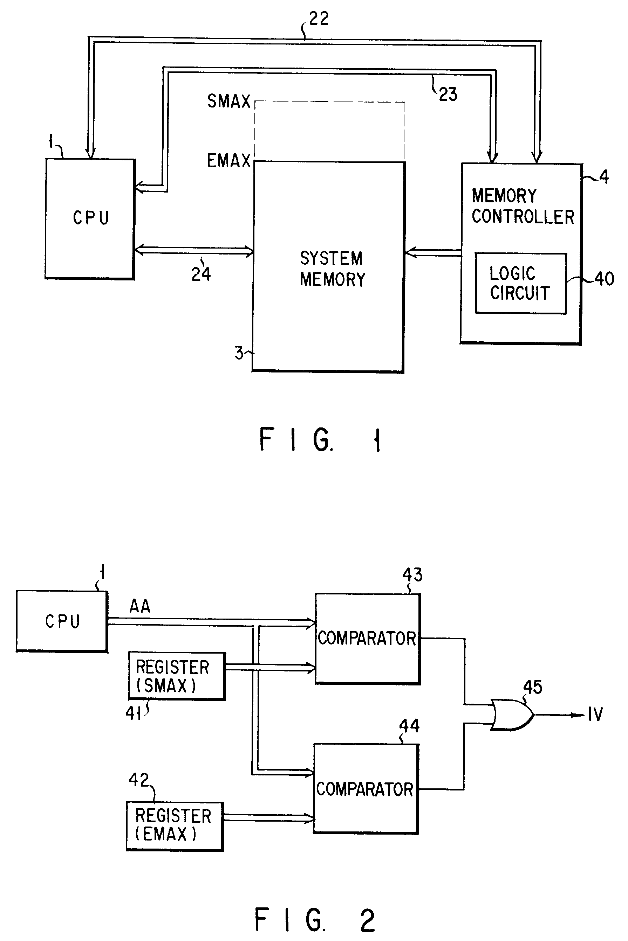

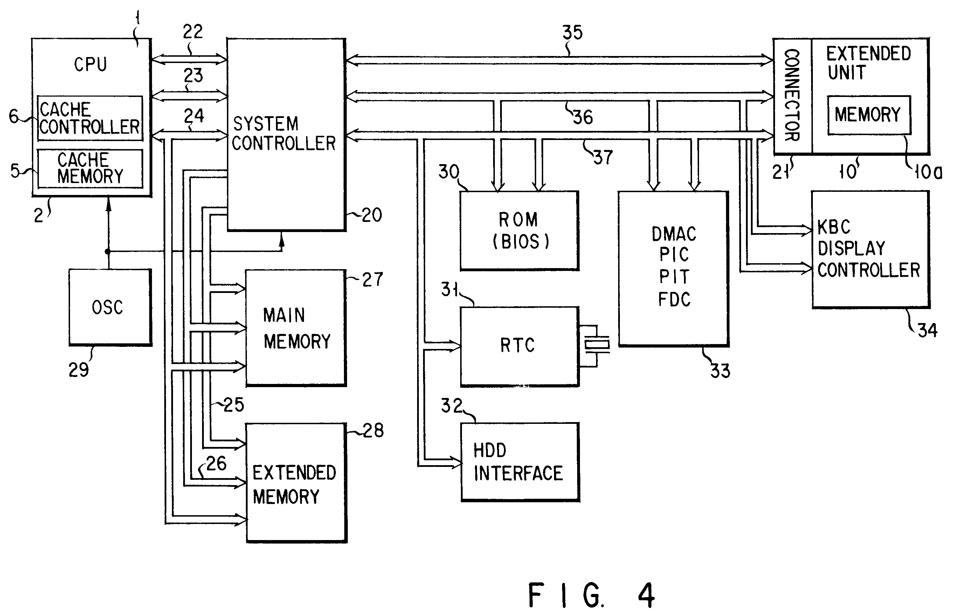

An important potion of a computer system in the present invention comprises CPU 1, system memory 3 and memory controller 4, as shown in Fig. 1. CPU 1 is a main body of an Intel's i486TM type microprocessor (reference numeral 2 in Fig. 4), for instance, and includes all components except a cache memory and a cache controller.

System memory 3 generally has a main address space and an extended address space, since it comprises a main memory, which is formed of conventional dynamic RAM's and has the main address space, and an extended memory, which is added to the main memory and has the extended address space.

Memory controller 4 is connected with CPU 1 by means of control bus 22 and address bus 23, and controls an access of CPU 1 to system memory 3 for both writing and reading based on control signals (a write/read control signal, etc.) and address data both put out of CPU 1.

Data bus 24 is used to transfer between CPU 1 and system memory 3 those data that have been accessed for writing and reading.

Memory controller 4 has logic circuit 40 which relates to the gist of the present invention. Logic circuit 40 is a determination logic circuit for determining whether or not an address which CPU 1 puts out for an access to system memory 3 exceeds systemic upper limit address value SMAX of a maximal address space of a memory capacity of the computer system, or existent upper limit address value EMAX of a maximal address space of system memory 3 which is actually equipped to the system.

Systemic upper limit address value SMAX is invariable and is set beforehand for maintaining compatibility of the computer system. In contrast, existent upper limit address value EMAX is variable according to an actually mounted condition of system memory 3. Namely, existent upper limit address value EMAX can be varied by an addition of an extended memory to the main memory, for instance, and its varying amount or extended address space corresponds to the storage capacity of the extended memory having been added to the main memory.

Memory controller 4 executes a memory control which validates or invalidates a memory access of CPU 1 based on the determination result of logic circuit 40, and puts out through control buss 22 to CPU 1 a signal which indicates that the memory access is valid or invalid.

Logic circuit 40 has registers 41, 42, comparators 43, 44, and OR gate 45, as shown in Fig. 2. Register 41 is set with systemic upper limit address value SMAX in advance, whereas register 42 is set with existent upper limit address value EMAX by, for instance, a BIOS (Basic Input and Output System) at a time when the system is activated. Comparator 43 compares address AA having been put out of CPU 1 with systemic upper limit address value SMAX having been set to register 41, and puts out a signal having a logic level "H" when address AA from CPU 1 exceeds systemic upper limit address value SMAX. Comparator 44 compares address AA from CPU 1 with existent upper limit address value EMAX having been set to register 42, and puts out a signal having a logic level "H" when address AA from CPU 1 exceeds existent upper limit address value EMAX. OR gate 45 puts out signal IV instructing invalidation of a memory cycle when it receives the output signal having a logic level "H" from comparator 43 or 44.

Fig. 4 is a block diagram showing a structure of a portable computer to which the computer system in the present invention is applied. This portable computer comprises 32 bit microcomputer (MPU) 2 such as an Intel's i486TM type microcomputer, system controller 20, and various other units.

System controller 20 is an LSI forming an interface between 32 bit MPU 2 and various units belonging to a 16 bit system. System controller 20 functions as memory controller 4 which relates to the present invention, a bus controller, an I/O (Input/Output) controller, and so forth.

System controller 20 is connected with MPU 2 by means of control bus 22, 32 bit address bus 23, and 32 bit data bus 24. Furthermore, system controller 20 is connected with main memory 27 and extended memory 28 by means of memory control bus 25 and memory address bus 26. Note that main memory 27 and extended memory 28 constitute system memory 3 shown in Fig. 1.

Control bus 22 is used for transfer of various control signals such as signal M/IO (a memory input/output signal), signal W/R (a write/read signal), signal D/C (a data/control signal), signal ADS (an address status signal), signal RDY (a ready signal) which is put out of memory controller 4 within system controller 20, and so forth.

Memory control bus 25 is used for transfer of memory control signals such as signal RAS (a row address strobe signal) and signal CAS (a column address strobe signal) both put out of memory controller 4.

System controller 20 and MPU 2 are supplied with clock pulse CLK which is necessary for their operation and is generated from clock generating circuit (OCS) 29.

What constitutes the aforementioned various units are ROM (a read-only memory) 30, RTC (a real time controller) 31, HDD (a hard disk drive) interface 32, unit 33 in which a DMAC (a direct memory access controller), a PIC (a programmable interrupt controller), a PIT (a programmable interval timer) and a FDC (a floppy disk controller) are included, and unit 34 in which a KBC (a keyboard controller) and a display controller are included. ROM 30 is a BIOS-ROM in which a BIOS is stored.

System controller 20 is connected with the above listed units 30 - 34 by means of control bus 35, address bus 36 and data bus 37. System controller 20 is connected with extension unit 10, which has extended memory 10a inside of it, by means of connector 21 for exclusive use of the extension unit. System controller 20 exchanges data, addresses, and various control signals with extended memory 10a mounted in extension unit 10 by means of control bus 35, address bus 36 and data bus 37.

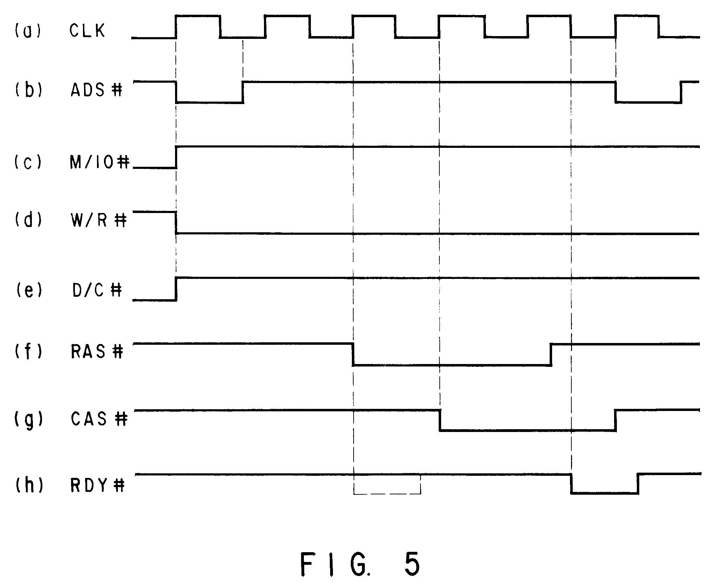

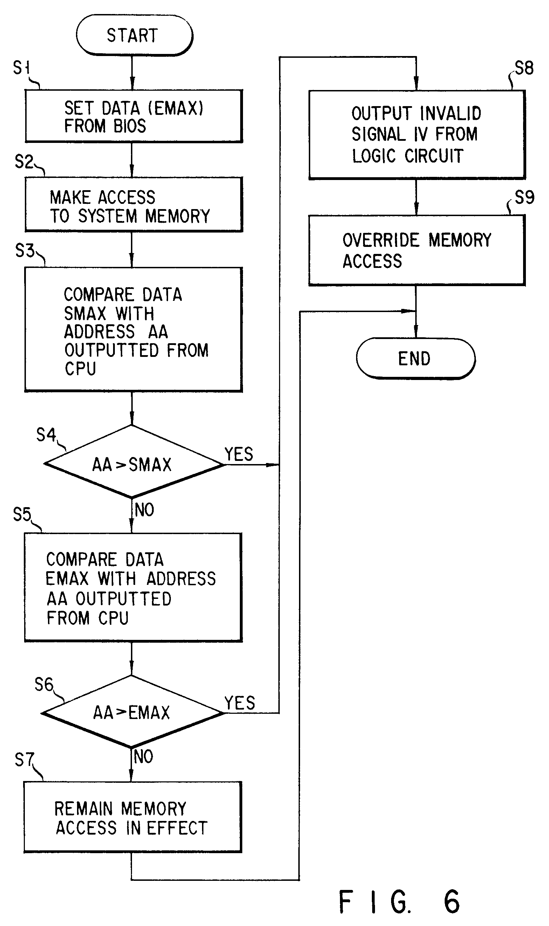

Now, an operation of the above-mentioned embodiment will be explained below with reference to the timing chart shown in Fig. 5 and the flow chart shown in Fig. 6.

An access of CPU 1 to system memory 3 is executed based on a timing of various control signals shown in Fig. 5. More specifically, CPU 1 puts out signal ADS, signal M/IO, signal W/R and signal D/C through control bus 22 to memory controller 4 (system controller 20) in synchronism with clock pulse CLK. Note that a symbol "#" shown in Fig. 5 indicates a negative logic. Signal M/IO is in a logic level "H" which indicates that an access target is a memory. Signal W/R is in a logic level "L" which indicates a read access. Signal D/C is in a logic level "H" which indicates data.

CPU 1 puts out through address bus 23 an address data indicating an address of system memory 3 which is an access target. Memory controller 4 converts the address data having been put out of CPU 1 into a combination of a row address and a column address for system memory 3, and supplies them to system memory 3 in synchronism with signal RAS and signal CAS, respectively.

Owing to such a control operation, data is read out of an address which is an access target of system memory 3, and is transferred through data bus 24 to CPU 1. When a memory access (a memory cycle) which is executed in response to the address supplied from CPU 1 has been finished, memory controller 4 puts out signal RDY through control buss 22 to CPU 1 to indicate that the memory access has been finished.

While CPU 1 is executing its memory access operation, memory controller 4 executes a memory access validation/invalidation determining process, as shown in the flow chart of Fig. 6.

Note that in logic circuit 40 systemic upper limit address value SMAX which is a maximal address value of a maximal memory space of the computer system, including a maximally extended address space, is set to register 41. Systemic upper limit address value SMAX is an invariable value which is set when the computer system is designed.

Existent upper limit address value EMAX of a maximal address space of system memory 3 actually mounted on the computer system is set to register 42 by the BIOS having been stored in BIOS-RAM 30 at a time of system excitation (Step S1). In this example, system memory 3 has such an address space that is constituted by adding to the address apace of main memory 27 an extended address space which corresponds to the memory capacity of extended memory 28.

At a time of system excitation an initialization routine stored in the BIOS is executed to perform a system initialization operation. While the system initialization operation is being executed, existent upper limit address value EMAX is set to register 42.

CPU 1 puts out address AA of an access target in order to access system memory 3 (a read access, in this case) (Step S2). Comparator 43 compares address AA having been put out of CPU 1 with systemic upper limit address value SMAX having been set to register 41 (Step S3). Comparator 44 compares address AA from CPU 1 with existent upper limit address value EMAX having been set to register 42 (Step S5).

When the comparison results of comparators 41 and 42 show that address AA from CPU 1 exceeds neither systemic upper limit address value SMAX nor existent upper limit address value EMAX ("NO" in Step S6), OR gate 45 puts out signal IV having a logic level "L." Signal IV having the logic level "L" indicates that the memory access of CPU 1 is valid. Based on signal IV having the logic level "L" memory controller 4 maintains the memory access of CPU 1 valid, and executes a memory control for reading data out of such a storage area of system memory 3 that corresponds to address AA (Step S7).

When the comparison result of comparator 41 shows that address An from CPU 1 exceeds systemic upper limit address value SMAX ("YES" in Step S4), OR gate 45 puts out signal IV having a logic level "H," which indicates that the memory access of CPU 1 is invalid (Step S8). Based on signal IV having the logic level "H," memory controller 4 executes an invalidation process for invalidating the memory access of CPU 1 (Step S9). More specifically, memory controller 4 stops an output of signals RAS and CAS, and stops a supply of a row address and a column address of system memory 3 that correspond to address data AA. In addition, memory controller 4 puts out to CPU 1 signal RDY indicating a memory access termination (a doted line in (h) of Fig. 5). Due to this, the memory access of CPU 1 is invalidated and the fact that the memory access of CPU 1 is invalidated is instructed to CPU 1.

When the comparison result of comparator 42 shows that address An from CPU 1 exceeds existent upper limit address value EMAX ("YES" in Step S6), OR gate 45 puts out signal IV having a logic level "H" (Step S8). Based on signal IV having the logic level "H," memory controller 4 executers an invalidation process for invalidating the memory access of CPU 1 (Step S9).

In this way the memory access of CPU 1 can be invalidated when an address of an access target exceeds the maximal address space of the computer system, including a maximally extended address space, upon an access of CPU 1 to system memory 3. In addition, a memory access of CPU 1 can also be invalidated when an address of the access target exceeds the maximal address space of system memory 3 having been actually mounted to the system.

Therefore, when CPU 1 tries to access 21 M byte systemic upper limit address value SMAX in a case that the maximal memory capacity of the computer system is 21 M byte, for instance, whereas the total memory capacity of system memory 3 actually mounted on the computer system is only 16 M bytes, for instance, a wraparound phenomenon will occur in the conventional system and the fifth M byte (21 - 16 = 5) of the memory will be accessed. In contrast, such a memory access of CPU 1 will be invalidated and the wraparound phenomenon will be prevented in the present invention. Since an access to nonexisting address space will never occur in the present invention, access to a wrong address, destruction of data stored in the wrongly accessed address, or malfunction of the CPU caused by the transfer of wrong data will surely be prevented.

Some microprocessors have a function of executing a predetermined initialization routine by executing a Far Jump instruction immediately after the CPU has been reset. What follows is another embodiment in which a CPU having such a function is employed.

When the Far Jump instruction is executed, CPU 1 generally puts out address value AF which is larger than systemic upper limit address value SMAX of the system. Memory controller 4 of system controller 20 converts address AF having been put out of CPU 1 to a predetermined address of BIOS-ROM 30 to access a predetermined memory area of BIOS-ROM 30. In the predetermined memory area of BIOS-ROM 30 a Far Jump instruction and a vector address (an address of a jump target) are stored. System controller 20 reads the Far Jump instruction and the vector address out of BIOS-ROM 30 and supplies them to CPU 1. CPU 1 jumps to the vector address and executes the predetermined initialization routine stored in the vector address.

However, since address value AF relative to the Far Jump instruction is larger than systemic upper limit address value SMAX, as stated above, it causes memory controller 4 to put out signal IV having a logic level "H" which indicates invalidation of a memory access of CPU 1. Therefore, the Far Jump instruction will not be executed because memory controller 4 invalidates the memory access of CPU 1.

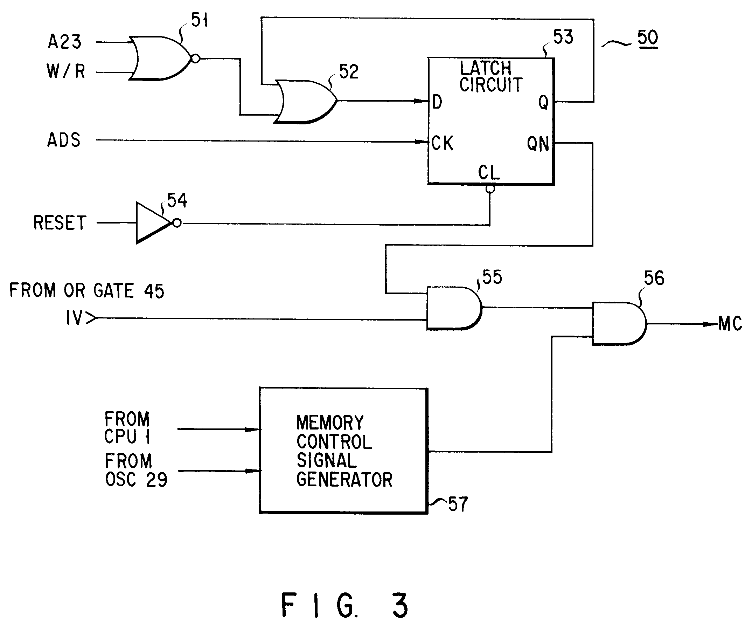

To execute any predetermined function, including a Far Jump instruction, in the present invention, logic circuit 50 is provided as shown in Fig. 3 to ignore signal IV having a logic level "H," or an invalidation signal, having been put out of logic circuit 40 and to validate logic circuit 40 after any predetermined function has been finished.

Logic circuit 50 has NOR gate 51, OR gate 52, latch circuit 53, inverter 54, and AND gates 55 and 56. When the predetermined functions including the Far Jump instruction are executed, memory controller 4 ignores signal IV having a logic level "H," or an invalidation signal, having been put out of logic circuit 40 and validates, with the help of logic circuit 50, various memory control signals (signal RAS, Signal CAS, etc.) MC having been put out of memory control signal generating circuit 5.

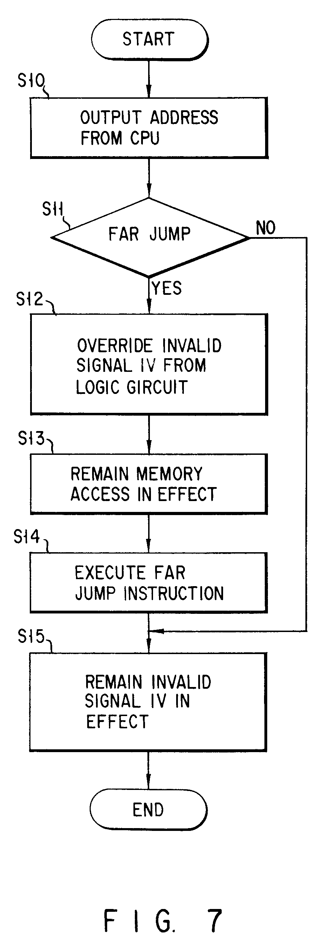

Now, the operation of logic circuit 50 will be explained below with reference to the circuit diagram shown in Fig. 3 and the flow chart shown in Fig. 7.

CPU 1 puts out address AF which is larger than systemic upper limit address value SMAX of the system in order to execute the Far Jump instruction right after the reset has finished (Step S10). Address AF causes address A23 having a logic level "H" among each bit of the address data to be put into NOR gate 51.

CPU 1 puts out along with address value AF both signal ADS, which has a logic level "L," and signal W/R, which has a logic level "L" and is a read command. NOR gate 51 puts out a signal having a logic level "L" when it receives signal W/R having a logic level "L." The output signal having a logic level "L" from NOR gate 51 is supplied through OR gate 52 to data input terminal D of latch circuit 53.

Latch circuit 53 is cleared when reset signal RESET for resetting CPU 1 is put into its clear CL, and puts out signal Q having a logic level "L" from its output terminal of a positive phase and signal QN having a logic level "H" from its output terminal of an inverted phase. When signal ADS changes to have a logic level "H," latch circuit 53 holds such an input signal that has a logic level "L" and has been supplied to data input terminal D. Therefore, latch circuit 53 maintains output signal QN having a logic level "H."

Logic circuit 40 causes OR gate 45 to put out signal IV having a logic level "H," or an invalidation signal, since address value AF having been put out of CPU 1 is larger than systemic upper limit address value SMAX of the system.

AND gate 55 receives both output signal QN and signal IV having a logic level "H," or an invalidation signal, and puts out a signal having a logic level "H," since both signals having been supplied to AND gate 55 have a logic level "H." AND gate 56 effectively allows the passage of various memory control signals MC having been supplied from memory control signal generating circuit 57, since the output signal from AND gate 55 has a logic level "H."

In another words, when the Far Jump instruction is executed right after the reset ("YES" in Step S11), signal IV having a logic level "H," or an invalidation signal, having been put out of logic circuit 40 is ignored (Step S12). Therefore, memory controller 4 maintains the validity of the memory access of CPU 1 with the help of valid various memory control signals MC having been put out of memory control signal generating circuit 57 (Step S13). Therefore, CPU 1 executes the aforementioned Far Jump instruction (Step S14).

Namely, the Far Jump instruction and the vector address both having been obtained by an access to BIOS-ROM 30 are supplied to CPU 1. Therefore, CPU 1 can jump to the vector address, and can execute a predetermined initialization routine stored in the vector address. At this moment, CPU 1 puts out a vector address which is smaller than systemic upper limit address value SMAX of the system or existent upper limit address value EMAX of the actually mounted memory.

Therefore, in logic circuit 50 the output signal of NOR gate 51 will have a logic level "H" since address A23 becomes to have a logic level "L." Therefore, output signal QN of latch circuit 53 will have a logic level "L" at a time when signal ADS changes to have a logic level "L." Latch circuit 53 maintains output signal QN having a logic level "L" at a time when signal ADS changes to have a logic level "H." As a result, the output signal of AND gate 55 will have a logic level "L." Namely, logic circuit 50 invalidates various memory control signals MC having been put out of memory control generating circuit 57.

Memory controller 4 therefore executes an invalidation control for invalidating the memory access of CPU 1 in response to signal IV having a logic level "H," or an invalidation signal, having been put out of logic circuit 40 (Step S15).

In this way, CPU 1 can ignore signal IV having a logic level "H," or an invalidation signal, having been put out of logic circuit 40 when CPU 1 puts out an address which exceeds the maximal address value (SMAX) of the system in case of executing a predetermined function such as the Far Jump instruction, for instance. Therefore, any predetermined function, including the Far Jump instruction, can be surely executed, and signal IV having a logic level "H," or an invalidation signal, having been put out of logic circuit 40 can be validated again after any predetermined function has been executed.

## Claims

1. A computer system comprising:
memory means (3) which has data storing areas defined by predetermined address spaces and is accessed by a CPU (1) of the system for reading and writing; and
memory control means (4) for executing an access control of an address of the memory means (3) designated by the CPU (1),
characterized in that the memory control means (4) compares an address value which has been accessed by the CPU (1) with an address upper limit of a maximal address space of the memory means (3), invalidates a memory access of the CPU (1) when the address value exceeds the address upper limit, and validates the memory access of the CPU (1) when the address value is equal to or less than the address upper limit.

2. A system according to claim 1, characterized in that said memory control means (4) has a first comparing means (43) for comparing an address value which has been accessed by the CPU with a first address upper limit of the maximal address space having been set in advance, and a second comparing means (44) for comparing a second address upper limit of an address space of the memory means (3) actually mounted on the system with the address value which has been accessed by the CPU (1), the system having a first logic circuit (40) which puts out an invalidation signal instructing that the memory access of the CPU (1) is invalid in a case that comparison results of the first and second comparison means (43, 44) show that the address value which has been accessed by the CPU (1) is larger than at least one of the first and second address upper limits.

3. A system according to claim 2, characterized in that said first logic circuit (40) has a first register means (41) for storing in advance the first address upper limit which is invariable and is determined by specifications of the system, and a second register means (42) for storing a second address upper limit which is set by the CPU (1) when the system is excited.

4. A system according to claim 2, characterized in that said first logic circuit (40) has a logic gate circuit (45) which puts out as said invalidation signal one of a meaningful signal having been put out of the first comparing means (43) when the address value which has been accessed by the CPU (1) is larger than the first address upper limit and a meaningful signal having been put out of the second comparing means (44) when the address value which has been accessed by the CPU (1) is larger than the second address upper limit.

5. A system according to claim 1, characterized by further comprising a second logic circuit (50) which ignores an invalidation process which the memory control means (4) executes to invalidate the memory access, and validates the invalidation process after the execution of the predetermined functions has been finished, in a case that the address value which has been accessed by the CPU (1) is larger than the address upper limit of the maximal address space of the memory means (3) and that the CPU (1) executes the predetermined functions based on the address value.

6. A system according to claim 5, characterized in that said second logic circuit (50) has a latch circuit (53) which latches an input data based on an address value, having been put out of the CPU (1) for executing the predetermined functions and being larger than the address upper limit, and puts out a meaningful signal having a meaning of execution of the predetermined functions, and logic gate circuits (55, 56) which put out various memory control signals for validating the memory access of the CPU (1) based on the meaningful signal having been put out of the latch circuit (53).

7. A system according to claim 2, characterized by further comprising a second logic circuit (50) which ignores the invalidation signal having been put out of the first logic circuit (40), and validates the invalidation signal to be put out of the first logic circuit (40) after the execution of the predetermined functions has been finished, in a case that the address value which has been accessed by the CPU (1) is larger than the address upper limit of the maximal address space of the memory means (3), and that the CPU (1) executes the predetermined functions based on the address value.

8. A system according to claim 7, characterized in that said second logic circuit (50) has a latch circuit (53) which latches an input data based on an address value, having been put out of the CPU (1) when the predetermined functions are executed and being larger than the address upper limit, and puts out a meaningful signal having a meaning of execution of the predetermined functions, and logic gate circuits (55, 56) which put out various memory control signals for validating the memory access of the CPU (1) based on the meaningful signal having been put out of the latch circuit (53) and the invalidation signal having been put out of the first logic circuit (40).
